# EUROPÄISCHE PATENTSCHRIFT

(11) **EP 3 310 623 B1**
(45) Veröffentlichungstag und Bekanntmachung des Hinweises auf die Patenterteilung: **25.07.2018**
(21) Anmeldenummer: 16763447.6
(22) Anmeldetag: 10.09.2016
(51) Int. Cl.: B60R 16/037, H04L 12/28, H04W 4/00, H04L 29/08

(54) **KOPPELN VON BETRIEBSZUSTÄNDEN EINES KRAFTFAHRZEUGS UND EINER FAHRZEUGEXTERNEN VORRICHTUNG**
CONNECTING OPERATING STATES OF A MOTOR VEHICLE AND A VEHICLE-EXTERNAL DEVICE
COUPLAGE D'ÉTATS DE FONCTIONNEMENT D'UN VÉHICULE AUTOMOBILE ET D'UN DISPOSITIF À L'EXTÉRIEUR DU VÉHICULE

(30) Priorität: 01.10.2015 DE 102015012723
(43) Veröffentlichungstag der Anmeldung: 25.04.2018
(73) Patentinhaber: Audi AG, 85045 Ingolstadt (DE)
(72) Erfinder: HIRSCH, Manuel, 85134 Stammham (DE)
(86) Internationale Anmeldenummer: PCT/EP2016/001528
(87) Internationale Veröffentlichungsnummer: WO 2017/054905

(56) Entgegenhaltungen:
- US-A1- 2014 309 789
- US-A1- 2015 187 209

## Beschreibung

Die Erfindung betrifft ein Verfahren zum Koppeln eines Betriebszustands eines Kraftfahrzeugs mit einem jeweiligen Betriebszustand zumindest einer fahrzeugexternen Vorrichtung. Das Verfahren kann durch eine Servereinrichtung durchgeführt werden, die beispielsweise als ein Server des Internets ausgestaltet sein kann. Zu der Erfindung gehören auch die Servereinrichtung sowie ein Kraftfahrzeug, welches über die Servereinrichtung mit der zumindest einen fahrzeugexternen Vorrichtung gekoppelt werden kann.

In einem Kraftfahrzeug ist die Kenntnis von fahrzeugexternen Zuständen der Umgebung weitestgehend davon abhängig, dass Sensoren rund um das Kraftfahrzeug diese Zustände erfassen. Dies ist aber nur während der Fahrt und nur in einem begrenzten Umfeld möglich. In einem Kraftfahrzeug ist es heutzutage beispielsweise nicht möglich, das aktuelle Temperaturempfinden des Fahrers bereits zu erkennen, wenn sich dieser noch in seinem Wohnzimmer befindet. Daher ist es auch nicht möglich, innerhalb des Kraftfahrzeugs darauf zu reagieren. Für eine Veränderung des Betriebszustands des Kraftfahrzeugs, beispielsweise das Anpassen der Klimatisierung an das aktuelle Temperaturempfinden des Fahrers, muss immer explizit eine Meldung oder ein Auslösebefehl an das Kraftfahrzeug gesendet werden. Hierzu kann beispielsweise eine Fernbedienung vorgesehen sein, mittels welcher die Standheizung des Kraftfahrzeugs durch den Fahrer eingeschaltet werden kann.

Aber auch in die andere Richtung, also aus dem Kraftfahrzeug heraus, gibt es keine automatisierte Integration in die Umgebung. Dies kann aber durchaus nützlich sein, um beispielsweise die Familie zu benachrichtigen, wenn sich der Fahrer mit dem Kraftfahrzeug auf dem Weg nach Hause befindet. Ein Fahrzeug kann aber nicht aufgrund des eigenen Betriebszustands, beispielsweise der eigenen aktuellen Geoposition, einen Zustand eines Geräts oder einer Vorrichtung außerhalb des Kraftfahrzeugs verändern.
Der Fahrer muss also in der Regel eine eigenständige Aktion aktiv ansteuern, um den Betriebszustand des Kraftfahrzeugs zu steuern. Andersherum muss er in der Regel auch aktiv einen Wunsch mitteilen, um eine Nachricht vom Kraftfahrzeug aus an eine fahrzeugexterne Vorrichtung auszusenden.
Aus der DE 10 2004 014 262 A1 ist ein Wecker bekannt, der die Weckzeit selbständig in Abhängigkeit davon einstellt, ob in einem Kraftfahrzeug Scheiben gefroren sind oder nicht.
Aus der DE 10 2011 106 357 A1 ist ein Verfahren bekannt, bei welchem ein Betriebszustand des Kraftfahrzeugs in Abhängigkeit von Kalenderdaten eines persönlichen Kalenders eines Nutzers eingestellt wird. Die Kalenderdaten werden über eine Funkverbindung empfangen.
Aus der DE 10 2010 009 760 A1 ist ein Kraftfahrzeug bekannt, das auf Gegenstände in der Umgebung reagiert, indem an den Gegenständen jeweils ein Transponder bereitgestellt ist, der ein Typinformation betreffend dem Gegenstand als Funksignal aussendet. Das Funksignal wird dann vom Kraftfahrzeug empfangen und zum Konfigurieren des Kraftfahrzeugs verwendet. Aus der US 2014/309789 A1 ist ein Verfahren nach dem Oberbegriff des unabhängigen Anspruchs bekannt.

Der Erfindung liegt die Aufgabe zugrunde, eine Interaktion zwischen Kraftfahrzeug und Umgebung zu automatisieren.
Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Durch die Erfindung ist ein Verfahren bereitgestellt, durch welches ein Betriebszustand des Kraftfahrzeugs mit einem jeweiligen Betriebszustand zumindest einer fahrzeugexternen Vorrichtung gekoppelt wird. Das Verfahren wird durch eine Servereinrichtung durchgeführt. Die Servereinrichtung ist dabei mit dem Kraftfahrzeug über zumindest einen Ereigniskanal und/oder zumindest einen Auslösekanal gekoppelt. Des Weiteren ist die Servereinrichtung mit jeder fahrzeugexternen Vorrichtung jeweils ebenfalls über zumindest einen Ereigniskanal und/oder zumindest einen Auslösekanal gekoppelt. Unter einem Kanal (Ereigniskanal, Auslösekanal) ist jeweils insbesondere ein Übertragungsweg für die jeweiligen Daten innerhalb einer Funkverbindung zu verstehen. Beispielsweise kann der Kanal mittels eines Zeitmultiplexverfahrens in an sich bekannter Weise realisiert sein.

Durch das Kraftfahrzeug werden über dessen zumindest einen Ereigniskanal Ereignisdaten zum Beschreiben des aktuellen Betriebszustands des Kraftfahrzeugs in der Servereinrichtung bereitgestellt und/oder über dessen zumindest einen Auslösekanal Auslösedaten zum Einstellen eines Sollbetriebszustands des Kraftfahrzeugs aus der Servereinrichtung empfangen. Durch jede der zumindest einen fahrzeugexternen Vorrichtung werden jeweils über deren zumindest einen Ereigniskanal Ereignisdaten zum Beschreiben des aktuellen Betriebszustands der Vorrichtung in der Servereinrichtung bereitgestellt und/oder über deren zumindest einen Auslösekanal Auslösedaten zum Einstellen eines Sollbetriebszustands der Vorrichtung aus der Servereinrichtung empfangen. Jeder Ereigniskanal kann für einen spezifischen Ereignistyp vorgesehen sein, also z.B. zum Signalisieren einer Zustandsänderung einer vorbestimmten Fahrzeugkomponente. Genauso kann jeder Auslösekanal zum Auslösen einer spezifischen Aktion vorgesehen sein, also z.B. zum Einstellen eines Betriebszustands einer vorbestimmten Fahrzeugkomponente. Insgesamt ergibt sich dabei zumindest ein Kanalpaar mit einem Ereigniskanal und einem Auslösekanal. Ein Kanalpaar kann also vom Kraftfahrzeug aus einen Ereigniskanal zur Servereinrichtung hin und einen Auslösekanal von der Servereinrichtung zu einer fahrzeugexternen Vorrichtung darstellen. Umgekehrt kann ein Kanalpaar auch von einer fahrzeugexternen Vorrichtung über einen Ereigniskanal zu der Servereinrichtung hin und von der Servereinrichtung über einen Auslösekanal zum Kraftfahrzeug führen. Mit anderen Worten sammelt die Servereinrichtung über Ereigniskanäle jeweilige Ereignisdaten zum aktuellen Betriebszustand des Kraftfahrzeugs und/oder der zumindest einen Vorrichtung und stellt über den jeweiligen Auslösekanal den Betriebszustand des Kraftfahrzeugs und/oder der zumindest einen fahrzeugexternen Vorrichtung ein. Somit ist unter Kanalpaar ein solches zu verstehen, über welches das Kraftfahrzeug mit jeweils einer der zumindest einen Vorrichtung gekoppelt ist. Es kann pro Ereignistyp, d.h. pro Ereigniskanal, jeweils ein Kanalpaar erzeugt werden. Ein Kanalpaar kann auch mehrere Ereigniskanäle und/oder Auslösekanäle umfassen.

Jedes Kanalpaar lässt sich nun flexibel nutzen. Hierzu wird durch eine Eingabeeinrichtung in Abhängigkeit von einer Benutzereingabe zumindest eine Verknüpfungsvorschrift festgelegt. Jede Verknüpfungsvorschrift gibt zu einem bereitgestellten Kanalpaar jeweils vorbestimmte Auslösedaten an, die über den Auslösekanal des Kanalpaars ausgesendet werden, falls über den Ereigniskanal des Kanalpaars vorbestimmte Ereignisdaten empfangen werden. Die Auslösedaten beschreiben also eine Reaktion, die in Abhängigkeit von vorbestimmten Ereignisdaten ausgelöst wird. Hierbei kann der Benutzer diese Reaktion auswählen oder festlegen, indem er die entsprechende Verknüpfungsvorschrift auswählt oder festlegt. Durch die Servereinrichtung werden dann der Betriebszustand des Kraftfahrzeugs und der jeweilige Betriebszustand der zumindest einen Vorrichtung gemäß der zumindest einen festgelegten Verknüpfungsvorschrift gekoppelt. Jede Verknüpfungsvorschrift stellt somit ein Rezept dar, wie das Kraftfahrzeug und die zumindest eine fahrzeugexterne Vorrichtung aufeinander reagieren sollen. Dies kann der Benutzer über die Eingabeeinrichtung festlegen oder verändern oder einstellen. Eine Verknüpfungsvorschrift kann beispielsweise eine als Wenn-Dann-Regel realisiert sein. Die Bedingung (WENN) beschreibt dann die Ereignisdaten. Die Folge (DANN) beschreibt die Auslösedaten.

Durch die Erfindung ergibt sich der Vorteil, dass die Kopplung der Betriebszustände des Kraftfahrzeugs einerseits und der zumindest einen fahrzeugexternen Vorrichtung andererseits nach dem Festlegen der zumindest einen Verknüpfungsvorschrift automatisiert ist. Mit anderen Worten muss ein Benutzer nach dem Festlegen der zumindest einen Verknüpfungsvorschrift keine weiteren Bedienschritte mehr ausführen, damit das Kraftfahrzeug und die zumindest eine fahrzeugexterne Vorrichtung aufeinander reagieren oder miteinander interagieren. Dies wird dann durch die Servereinrichtung durchgeführt. Hierbei ist das Betriebsverhalten der Servereinrichtung vom Benutzer mittels der zumindest einen Verknüpfungsvorschrift frei definierbar oder festlegbar. Besonders vorteilhaft ist hierbei, dass auch im Nachhinein bei einem Kraftfahrzeug weitere Ereignisse und Aktionen hinzufügen lassen und diese sich zu neuen Anwendungsfällen verknüpfen lassen. Durch Hinzufügen eines neuen Ereignisses kann dabei ein neuer Ereigniskanal gebildet oder ein bestehendes Kanalpaar erweitert werden. Genauso kann für jede neue Aktion ein Auslösekanal erzeugt werden.

Zu der Erfindung gehören auch optionale Weiterbildungen, durch deren Merkmale sich zusätzliche Vorteile ergeben. Bei deren Beschreibung wird jeweils davon ausgegangen, dass das Kraftfahrzeug und die zumindest eine Vorrichtung die jeweils erwähnten Ereigniskanäle und Auslösekanäle bereitstellen.

Gemäß einer Weiterbildung umfasst die zumindest eine Vorrichtung eine Gebäudesteuereinrichtung eines Gebäudes. Mit anderen Worten stellt diese Vorrichtung eine Gebäudeautomatisierungsanlage dar. Bei dem Gebäude kann es beispielsweise um ein Wohnhaus oder ein Industriegebäude oder ein Bürogebäude handeln. Entsprechend ist durch das zumindest eine Kanalpaar das Kraftfahrzeug über zumindest eine Verknüpfungsvorschrift mit der Gebäudesteuereinrichtung des Gebäudes gekoppelt. Hierdurch ergibt sich der Vorteil, dass ein Betriebszustand des Gebäudes und/oder eine Zustandsänderung des Gebäudes über die zumindest eine Verknüpfungsvorschrift auf den Betriebszustand des Kraftfahrzeugs wirkt. Umgekehrt wirkt ein Betriebszustand und/oder eine Zustandsänderung des Kraftfahrzeugs über die zumindest eine Verknüpfungsvorschrift auf das Gebäude.

So sieht eine Weiterbildung hierzu vor, dass als eine der zumindest einen Verknüpfungsvorschrift festgelegt wird, dass über den Ereigniskanal des Kraftfahrzeugs ein Navigationsziel eines Navigationsgeräts des Kraftfahrzeugs empfangen wird. Über den Auslösekanal der Gebäudesteuereinrichtung wird ein Schaltbefehl zum Einstellen eines Betriebsprofils für einen Leerstand an die Gebäudesteuereinrichtung ausgesendet, falls das Navigationsziel weiter als eine vorbestimmte Mindestdistanz von dem Gebäude entfernt. Das Betriebsprofil für den Leerstand legt hierbei fest, dass das Gebäude durch die Gebäudesteuereinrichtung derart betrieben wird, wie es vorgesehen ist, wenn sich keine Person in dem Gebäude aufhält. Insbesondere wird ein Energieverbrauch minimiert. Dieses Betriebsprofil wird nun automatisiert eingestellt, falls anhand des Navigationsziels erkannt wird, dass sich ein Benutzer weiter als eine vorbestimmte Mindestdistanz von dem Gebäude entfernen wird. Hierdurch können Energieeinspareffekte bei dem Gebäude erzielt werden. Die Mindestdistanz kann beispielsweise 200 km oder 250 km betragen.

Eine Weiterbildung sieht vor, dass als eine der zumindest einen Verknüpfungsvorschrift festgelegt wird, dass über den Ereigniskanal der Gebäudesteuereinrichtung eine aktuelle Solltemperatur einer Heizungsanlage des Gebäudes empfangen wird. Die Solltemperatur wird über den Auslösekanal des Kraftfahrzeugs als Zieltemperatur einer Klimaanlage des Kraftfahrzeugs an das Kraftfahrzeug ausgesendet. Hierdurch ergibt sich der Vorteil, dass der Benutzer des Kraftfahrzeugs beim Einsteigen in das Kraftfahrzeug dort bereits dieselbe Zieltemperatur eingestellt vorfindet, die er auch als Solltemperatur in der Heizungsanlage des Gebäudes eingestellt hat. Der Benutzer muss also kein zweites Mal diese Solltemperatur einstellen.
Das Kraftfahrzeug kann aber nicht nur mit einer Gebäudesteuereinrichtung gekoppelt werden. Die Erfindung sieht vor, dass die zumindest eine Vorrichtung eine Überwachungseinrichtung für zumindest eine Körperfunktion eines Benutzers des Kraftfahrzeugs umfasst. Die Überwachungseinrichtung kann beispielsweise durch eine Smartwatch oder eine Pulsmesseinrichtung oder eine Blutdruckmesseinrichtung bereitgestellt sein. Als eine der zumindest einen Verknüpfungsvorschrift wird festgelegt, dass über den Ereigniskanal der Überwachungseinrichtung Körperzustandsdaten empfangen werden. Über den Auslösekanal des Kraftfahrzeugs wird in Abhängigkeit von den empfangenen Körperzustandsdaten ein Stellbefehl an das Kraftfahrzeug ausgesendet. Hierdurch ergibt sich der Vorteil, dass das Kraftfahrzeug in Abhängigkeit von dem aktuellen Körperzustand des Benutzers eingestellt oder konfiguriert wird. Erfindungsgemäß wird durch die Körperzustandsdaten ein Erwachenszeitpunkt des Benutzers signalisiert. Als Stellbefehl wird ein Startzeitpunkt einer Standheizung des Kraft fahrzeugs ausgesendet. Erfindungsgemäß wird also durch die Verknüpfungsvorschrift die Regel oder das Rezept festgelegt sein, dass nach dem Aufwachen des Benutzers die Standheizung nach einer vorbestimmten Zeitdauer, beispielsweise nach 50 Minuten, gestartet. Gemäß einer Weiterbildung umfasst die zumindest eine Vorrichtung eine Nachrichtenempfangseinrichtung. Die Nachrichtenempfangseinrichtung kann beispielsweise durch ein Smartphone oder ein Tablet-PC oder einen Personalcomputer realisiert sein. Als eine der zumindest einen Verknüpfungsvorschrift wird festgelegt, dass über den Ereigniskanal des Kraftfahrzeugs ein Fahrzeugstandort empfangen wird. Über den Auslösekanal der Nachrichtenempfangseinrichtung wird eine Standortbenachrichtigung mit dem Standort an die Nachrichtenempfangseinrichtung ausgesendet, falls das Kraftfahrzeug den Fahrzeugstandort innerhalb eines vorbestimmten Zeitintervalls aufweist. Hierdurch wird in vorteilhafter Weise der Benutzer des Kraftfahrzeugs daran erinnert, dass sich das Kraftfahrzeug innerhalb des Zeitintervalls noch an dem Fahrzeugstandort befindet. Falls das Kraftfahrzeug beispielsweise nach einer vorbestimmten Tageszeit noch nicht beispielsweise in der Garage steht, wird der Benutzer daran durch die Standortbenachrichtigung erinnert. Der Benutzer kann dann das Kraftfahrzeug beispielsweise in die Garage fahren.

Gemäß einer Weiterbildung umfasst die zumindest eine Vorrichtung eine Kommunikationseinrichtung mit einem Ortungssensor. Bei der Kommunikationseinrichtung kann es sich beispielsweise um ein Smartphone mit GPS-Sensor (GPS - Global Positioning System) handeln. Als eine der zumindest einen Verknüpfungsvorschrift ist festgelegt, dass über den Ereigniskanal der Kommunikationseinrichtung eine Nachricht empfangen wird und über den Auslösekanal des Kraftfahrzeugs ein Standort der Kommunikationseinrichtung als Navigationsziel an das Kraftfahrzeug ausgesendet wird, falls die Nachricht innerhalb eines vorbestimmten Zeitintervalls empfangen wird und/oder die Kommunikationseinrichtung einer vorbestimmten Person zugeordnet ist. Beispielsweise kann also als Verknüpfungsvorschrift festgelegt sein, dass über die Kommunikationseinrichtung eine Nachricht von einer vorbestimmten Person empfangen wird und dann im Kraftfahrzeug des Benutzers der Standort der Person, die die Kommunikationseinrichtung nutzt, im Navigationsgerät des Kraftfahrzeugs des Benutzers eingestellt wird. Es kann auch vorgesehen sein, dass ein Benutzer der Kommunikationseinrichtung eine Nachricht mit einer Anfrage nach dem Standort empfängt und dann der Standort in dem Kommunikationsgerät des Kraftfahrzeugs der anfragenden Person eingestellt wird, sodass diese Person zum Standort des Benutzers der Kommunikationseinrichtung navigiert werden kann.

Eine Weiterbildung sieht vor, dass die zumindest eine fahrzeugexterne Vorrichtung eine Gerätesteuereinrichtung eines Geräts umfasst und als eine der zumindest einen Verknüpfungsvorschrift festgelegt wird, dass über den Ereigniskanal des Kraftfahrzeugs eine Grenzüberschreitungsnachricht empfangen wird. Die Grenzüberschreitungsnachricht gibt ein Verlassen eines vorbestimmten Gebiets oder ein Einfahren in das Gebiet an. Dies kann mittels eines GPS-Sensors des Kraftfahrzeugs ermittelt werden. Über den Auslösekanal der Gerätesteuereinrichtung wird ein Aktivierungssignal einer Gerätefunktion des Geräts an die Gerätesteuereinrichtung ausgesendet. Hierdurch ergibt sich der Vorteil, dass in dem Gerät die Gerätefunktion aktiviert wird, sobald das Kraftfahrzeug ein vorbestimmtes Gebiet verlässt oder in das Gebiet hineinfährt. Beispielsweise kann vorgesehen sein, dass in einem Gebäude ein Licht einer Leuchte grün gestellt wird, sobald das Kraftfahrzeug ein vorbestimmtes Gelände verlässt. In vorteilhafter Weise kann somit das fahrzeugexterne Gerät in Abhängigkeit von einem Aufenthaltsort des Kraftfahrzeugs gesteuert werden.

Eine weitere, nicht gesondert beanspruchte Ausführungsform sieht vor, dass zumindest eine Vorrichtung eine Veranstaltungsinformationseinrichtung umfasst und als eine der zumindest einen Verknüpfungsvorschrift festgelegt wird, dass über den Ereigniskanal der Veranstaltungsinformationseinrichtung ein Veranstaltungsort empfangen wird und über den Auslösekanal des Kraftfahrzeugs der Veranstaltungsort als Navigationsziel eines Navigationsgeräts des Kraftfahrzeugs an das Kraftfahrzeug ausgesendet wird. Hierdurch wird dann das Kraftfahrzeug ohne ein Zutun des Fahrers zu dem Veranstaltungsort navigiert.

Wie bereits ausgeführt, gehört zu der Erfindung auch die Servereinrichtung, die zum Ausführen einer Ausführungsform des erfindungsgemäßen Verfahrens eingerichtet ist. Bei der Servereinrichtung kann es sich beispielsweise um einen Server des Internets handeln. Die Servereinrichtung kann zum Durchführen des Verfahrens eine Prozessoreinrichtung aufweisen, die beispielsweise auf der Grundlage eines Mikroprozessors oder mehrere Mikroprozessoren realisiert sein kann.

Schließlich gehört zu der Erfindung auch ein Kraftfahrzeug. Das erfindungsgemäße Kraftfahrzeug weist ein Funkmodul und eine Steuereinrichtung auf. Das Funkmodul kann beispielsweise ein Mobilfunkmodul (GSM, UMTS; LTE) oder ein WLAN-Funkmodul (WLAN - Wireless Local Area Network) sein. Die Steuereinrichtung kann beispielsweise auf der Grundlage eines Mikrocontrollers oder eines Mikroprozessors realisiert sein. Die Steuereinrichtung ist dazu eingerichtet, über das Funkmodul zu einer fahrzeugexternen Servereinrichtung zumindest einen Ereigniskanal zum Aussenden von Ereignisdaten betreffend einen aktuellen Betriebszustand und/oder zumindest einen Auslösekanal zum Empfangen von Auslösedaten zum Einstellen eines Sollbetriebszustands bereitzustellen oder aufzubauen. Bei dem erfindungsgemäßen Kraftfahrzeug sind als Ereignisdaten eine Fahrzeugposition und/oder ein Kamerabild und/oder ein Navigationsziel und/oder eine Grenzüberschreitungsnachricht einer vorbestimmten geographischen Grenze vorgesehen. Als Auslösedaten können eine Zieltemperatur und/oder ein Startzeitwert und/oder eine Positionsanfrage und/oder ein Navigationsziel und/oder Grenzbeschreibungsdaten einer geographischen Grenze und/oder ein Aktivierungsbefehl für eine Hupe und/oder einen Scheinwerfer vorgesehen sein.

Durch das erfindungsgemäße Kraftfahrzeug ergibt sich der Vorteil, dass dieses Kraftfahrzeug mit der Servereinrichtung über den zumindest einen Ereigniskanal und/oder den zumindest einen Auslösekanal gekoppelt werden kann und hierdurch das Kraftfahrzeug in die Umgebung dahingehend integriert werden kann, dass der Betriebszustand des Kraftfahrzeugs und ein Betriebszustand zumindest einer fahrzeugexternen Vorrichtung über eine jeweilige Verknüpfungsvorschrift miteinander gekoppelt werden können.

Eine Ausführungsform des Kraftfahrzeugs sieht vor, dass eine Navigationseinrichtung des Kraftfahrzeugs überwacht, ob sich das Kraftfahrzeug innerhalb eines vorbestimmten Abstands zu einer vorbestimmten Sehenswürdigkeit befindet. Falls das Kraftfahrzeug sich innerhalb des Abstands zu der Sehenswürdigkeit befindet, wird mittels einer bordeigenen Kamera des Kraftfahrzeugs ein Kamerabild der Sehenswürdigkeit erzeugt und als Ereignisdaten über den Ereigniskanal Bilddaten des Kamerabilds ausgesendet. Hierdurch kann dann durch eine entsprechende Verknüpfungsvorschrift in der Servereinrichtung eingestellt werden, dass bei Passieren oder Vorbeifahren an einer Sehenswürdigkeit automatisiert ein Kamerabild der Sehenswürdigkeit erzeugt wird und dieses gemäß der Verknüpfungsvorschrift in einen Datenspeicher außerhalb des Kraftfahrzeugs gespeichert wird. Der Datenspeicher kann beispielsweise der Datenspeicher eines sozialen Netzwerks sein, sodass das Kamerabild anderen Benutzern des sozialen Netzwerks bereitgestellt wird, also das Kamerabild publiziert wird.

Das erfindungsgemäße Kraftfahrzeug ist bevorzugt als Kraftwagen, insbesondere als Personenkraftwagen, ausgestaltet.

Im Folgenden ist ein Ausführungsbeispiel der Erfindung beschrieben. Hierzu zeigt:
- Fig. 1: eine schematische Darstellung eines Systems mit einer Ausführungsform der erfindungsgemäßen Servereinrichtung und einer Ausführungsform des erfindungsgemäßen Kraftfahrzeugs;
- Fig. 2: eine schematische Darstellung einer Benutzerschnittstelle einer Eingabeeinrichtung der Servereinrichtung, über welche der Benutzer zumindest eine Verknüpfungsvorschrift auswählen kann; und
- Fig. 3: eine schematische Darstellung einer Benutzerschnittstelle der Eingabeeinrichtung, über welche der Benutzer eine Verknüpfungsvorschrift konfigurieren kann.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

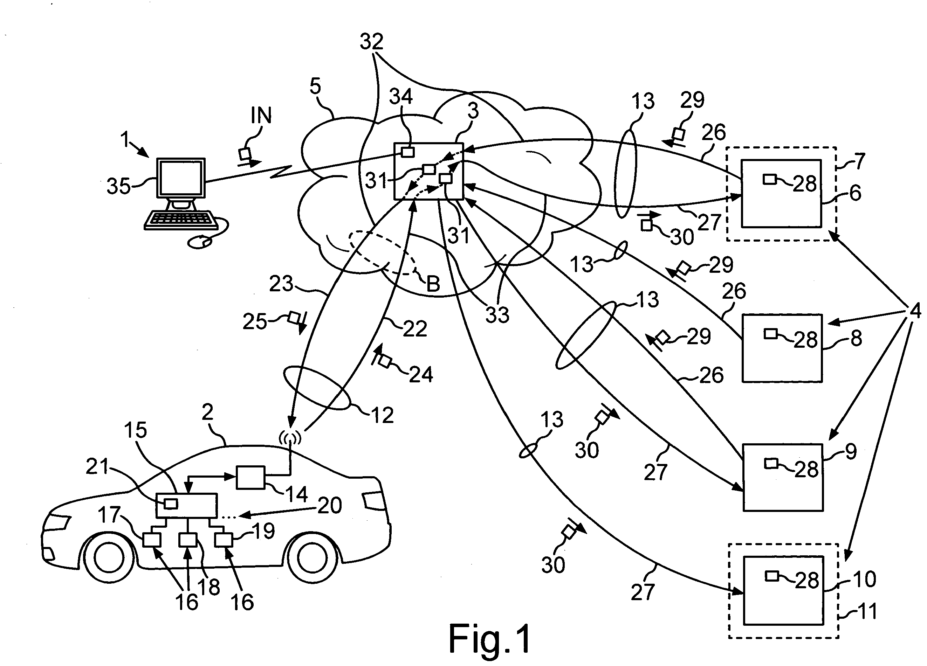

Fig. 1 zeigt ein System 1, durch welches ein Kraftfahrzeug 2 über eine Servereinrichtung 3 mit zumindest einer fahrzeugexternen Vorrichtung 4 dahingehend gekoppelt ist, dass ein jeweiliger Betriebszustand des Kraftfahrzeugs 2 und der zumindest einen Vorrichtung 4 gekoppelt ist. Die Servereinrichtung 3 kann beispielsweise ein Server des Internets 5 sein.

Die fahrzeugexterne Vorrichtungen 4 befinden sich außerhalb des Kraftfahrzeugs 2. Beispielsweise kann davon ausgegangen werden, dass sich bei der zumindest einen Vorrichtung 4 um eine Gebäudesteuereinrichtung 6 für ein Gebäude 7, eine Überwachungseinrichtung 8 für eine Körperfunktion eines Benutzers (nicht dargestellt), ein Smartphone 9 und/oder eine Gerätesteuereinrichtung 10 eines Gerätes 11 handeln kann. Das Kraftfahrzeug 2 kann über eine Funkverbindung 12 mit der Steuereinrichtung 3 gekoppelt sein. Die zumindest eine Vorrichtung 4 kann über eine jeweilige Datenverbindung 13 mit der Servereinrichtung 3 gekoppelt sein. Die Datenverbindung 13 kann jeweils in an sich bekannter Weise drahtgebunden und/oder drahtlos realisiert sein.

Zum Bereitstellen der Funkverbindung 12 weist das Kraftfahrzeug 2 ein Funkmodul 14 auf, bei dem es sich beispielsweise um ein Mobilfunkmodul oder ein WLAN-Modul handeln kann. Über die Funkverbindung 12 des Funkmoduls 14 ist eine Steuereinrichtung 15 des Kraftfahrzeugs 2 mit der Servereinrichtung 3 gekoppelt. Die Steuereinrichtung 15 kann beispielsweise auf der Grundlage eines Steuergeräts und/oder einer Prozessoreinrichtung des Kraftfahrzeugs 2 realisiert sein. Mit der Steuereinrichtung 15 können mit Fahrzeugkomponenten 16 gekoppelt sein. Eine Fahrzeugkomponente 16 kann beispielsweise ein Navigationsgerät 17 sein, eine Fahrzeugkomponente 16 kann beispielsweise eine Klimaanlage und Standheizung 18 und eine Fahrzeugkomponente 16 kann beispielsweise eine Kamera 19 sein. Weitere Fahrzeugkomponenten sind durch Auslassungspunkte 20 (...) angedeutet. Ein jeweiliger Betriebszustand 21 der Fahrzeugkomponenten 16 wird durch die Steuereinrichtung 15 überwacht und/oder gesteuert. Der Übersichtlichkeit halber ist nur ein Fahrzeugzustand 21 dargestellt, der den Betriebszustand einer Fahrzeugskomponente 16 repräsentiert. Da der Betriebszustand 21 eine Fahrzeugkomponente 16 des Kraftfahrzeugs 1 betrifft, wird er hier auch als Betriebszustand 21 des Kraftfahrzeugs 1 bezeichnet.

Die Funkverbindung 12 kann mehrere Kanäle aufweisen. In dem in Fig. 1 veranschaulichten Beispiel weist die Funkverbindung 12 zwei Kanäle auf, nämlich einen ausgehenden Ereigniskanal 22 und einen eingehenden Auslösekanal 23. Es können mehrere Ereigniskanäle und/oder mehrere Auslösekanäle vorgesehen sein. Über den Ereigniskanal 22 kann die Steuereinrichtung 15 den aktuellen Betriebszustand 21 und/oder eine Veränderung des Betriebszustands 21 als Ereignisdaten 24 signalisieren. Über den Auslösekanal 23 kann die Steuereinrichtung 15 Auslösedaten 25 empfangen, welche eine Veränderung des Betriebszustands 21 vorgeben, also einen Sollbetriebszustand vorgeben. Beispielsweise können die Auslösedaten 25 für eine der Fahrzeugkomponenten 16 einen Steuerbefehl umfassen.

Genauso kann bei der zumindest einen Vorrichtung 4 durch die jeweilige Datenverbindung 13 ein Ereigniskanal 26 und/oder ein Auslösekanal 27 bereitgestellt sein. Die zumindest eine Vorrichtung 4 kann über den jeweiligen Ereigniskanal 26 einen Betriebszustand 28 und/oder eine Änderung des Betriebszustand 28 als Ereignisdaten 29 an die Servereinrichtung 3 signalisieren. Der jeweilige Betriebszustand 28 kann bei der zumindest einen Vorrichtung 4 in Abhängigkeit von Auslösedaten 30 der Servereinrichtung 3 auf einen Sollbetriebszustand eingestellt werden. Die Auslösedaten 30 können hierzu beispielsweise einen Stellbefehl umfassen.

Durch die Steuereinrichtung 3 wird jeweils ein Kanalpaar aus einem Ereigniskanal und einem Auslösekanal über eine jeweilige Verknüpfungsvorschrift 31 verknüpft. In Fig. 1 sind zwei Kanalpaare 32, 33 veranschaulicht. Das Kanalpaar 32 verknüpft den Ereigniskanal 26 der Gebäudesteuereinrichtung 6 mit dem Auslösekanal 23 des Kraftfahrzeugs 2. Das Kanalpaar 33 umfasst den Ereigniskanal 22 des Kraftfahrzeugs 2 und den Auslösekanal 27 der Gebäudesteuereinrichtung 6.

Das Bilden der Kanalpaare 32, 33 und/oder das Festlegen der Verknüpfungsvorschriften 31 kann durch eine Eingabeeinrichtung 34 von dem Benutzer gesteuert werden. Der Benutzer kann hierzu beispielsweise mittels einer Bedieneinrichtung 35, beispielsweise einem Smartphone oder einem Personal-Computer oder einem Infotainmentsystem des Kraftfahrzeugs 2 die Eingabeeinrichtung 34 verbinden. Die Eingabeeinrichtung 34 kann hierzu beispielsweise eine Intern-Seite bereitstellen, die mittels der Bedieneinrichtung 35 in an sich bekannter Weise beispielsweise über einen Internetbrowser bedient werden kann. Mittels der Bedieneinrichtung 35 erzeugt der Benutzer eine Benutereingabe IN zum Festlegen der zumindest einen Verknüpfungsvorschriften 31 in der Eingabeeinrichtung 34.

Auch die übrigen Ereigniskanäle 26 und Auslösekanäle 27 der zumindest einen Vorrichtung 4 können jeweils über eine Verknüpfungsvorschrift 31 mit einem komplementären Kanal, das heißt dem Ereigniskanal 22 oder dem Auslösekanal 23 des Kraftfahrzeugs 2 verknüpft sein.

Jede Verknüpfungsvorschrift 31 kann beispielsweise als WENN-DANN-Regel (IF - THEN) ausgestaltet sein.

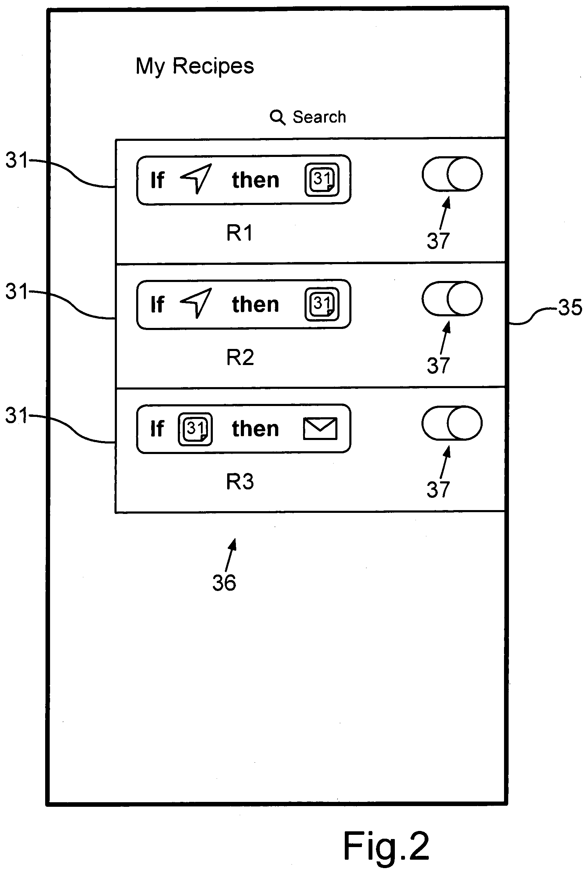

Im Folgenden ist anhand von Fig. 2 eine Benutzerschnittstelle 36 der Eingabeeinrichtung 35 veranschaulicht, die beispielsweise als Internetseite bereitgestellt sein kann.

Die Benutzerschnittstelle 36 kann vorsehen, dass vorgefertigte oder vorbereitete oder gespeicherte Verknüpfungsvorschriften 31 dem Benutzer zur Auswahl angeboten werden, die der Benutzer mittels eines Auswahlelements oder Aktivierungselements 37 aktivieren oder deaktivieren kann. Dargestellt sind insgesamt drei Verknüpfungsvorschriften R1, R2, R3.

Die Verknüpfungsvorschrift R1 kann beispielsweise besagen: "Wenn ich meinen Arbeitsplatz mit dem Kraftfahrzeug verlasse, schalte meine Leuchte zu Hause im Gebäude 7 auf die Leuchtfarbe grün".

Die Verknüpfungsvorschrift R2 kann beispielsweise besagen: "Wenn ich in das Gebiet hineinfahre, dann sende eine Nachricht an XY."

Die Verknüpfungsvorschrift R3 kann beispielsweise kann beispielsweise besagen: "Falls in meinem Terminkalender ein Ereignis startet, sende an mein Navigationsgerät 17 den Ereignisstandort als Navigationsziel".

Im Folgenden sind einige weitere mögliche Verknüpfungsvorschriften beispielhaft angegeben:
Wenn eine Wohlfühltemperatur im Wohnzimmer des Gebäudes 7 gewählt wird, dann übernehme die Wunschtemperatur in mein Kraftfahrzeug 2 (Gebäudesteuereinrichtung 6). Wenn ich aufwache, dann starte Standheizung 18 nach 50 Minuten, wobei die Erkennung des Aufwachzeitpunktes durch Überwachungseinrichtung 8 erfolgt. Wenn mein Kraftfahrzeug 2 nach 18 Uhr noch vor der Garage steht, dann sende mir eine Benachrichtigung auf mein Smartphone 9. Wenn ich an Sehenswürdigkeiten vorbeifahre, beispielsweise der Allianz-Arena in München, dann lade ein Foto mit meiner Kamera 19 auf einen Server mit Publikationsmöglichkeiten auf sozialen Medien. Wenn die Navigations-Zielführung des Navigationsgeräts 17 über 250 km vom Gebäude 7 entfernt aktiviert ist, dann stelle im Gebäude 7 die Gebäudesteuereinrichtung 6 auf Abwesenheit (Leerstandssteuerung) ein. Wenn meine Kinder am Wochenende nach 23 Uhr auf meinem Smartphone 9 anrufen, dann sende mir deren Standort an mein Navigationsgerät 17 im Kraftfahrzeug 2. Wenn meine Frau/Freundin/mein Kind mich über mein Smartphone 9 anruft oder eine Anfrage beispielsweise per SMS (Short Message Service) anfragt, dann sende den Standort des Smartphones 9 an das Navigationsgerät 17 des Kraftfahrzeugs 2 der Frau/Freundin/des Kindes. Wenn meine Veranstaltungsinformationseinrichtung Sternschnuppen im Umkreis von 80 km ankündigt, dann benachrichtige auf dem Smartphone 9 und sende mir die Position der Veranstaltung an das Navigationsgerät 17 meines Kraftfahrzeugs 2. Wenn ich meinen Arbeitsplatz mit dem Kraftfahrzeug 2 verlasse, dann schalte mein Ambientelicht des Geräts 11 in meinem Wohnzimmer auf grün. Wenn in nächster Zeit ein Kalendereintrag ansteht, sende den Ort des Eintrages an mein Navigationsgerät 17 des Kraftfahrzeugs 2.

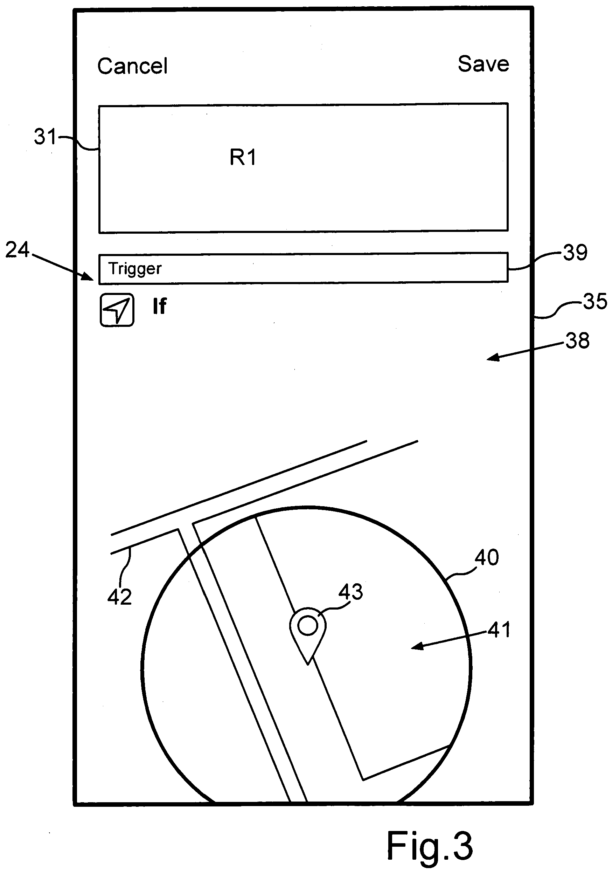

Fig. 3 veranschaulicht, wie dem Fahrer mittels der Eingabeeinrichtung 35 durch eine Benutzerschnittstelle 38 die Möglichkeit bereitgestellt werden kann, eine Verknüpfungsvorschrift 31 zu verändern. Fig. 3 veranschaulicht beispielhaft die Konfiguration der Verknüpfungsvorschrift R1. Als Ereignisdaten 24 wird als Auslöser oder Trigger 39 eine geographische Grenze 40 festgelegt. Die Grenze 40 grenzt ein geographisches Gebiet 41 beispielsweise in einem Straßensystem 42 ab.

Ein aktueller Standort 43 des Kraftfahrzeugs 2 kann innerhalb des Gebiets 41 oder außerhalb des Gebiets 41 liegen. Der aktuelle Standort 43 kann beispielsweise durch das Navigationssystem 17 beispielsweise mittels eines GPS-Sensors ermittelt werden. Die Verknüpfungsvorschrift R1 kann vorsehen, dass für den Fall, dass das Kraftfahrzeug 2 die Grenze 40 kreuzt oder überschreitet, Auslösedaten 30 an die zumindest eine Vorrichtung 4 ausgesendet werden. Die in dem Beispiel der Verknüpfungsvorschrift R1 werden also Auslösedaten 30 mit einem Stellbefehl für die Lichtfarbe an die Gebäudesteuereinrichtung 6 ausgesendet, damit diese die Lichtfarbe einstellt. Es kann auch vorgesehen sein, dass die Auslösedaten 30 an die Gerätesteuereinrichtung 10 aussendet, damit diese in einer Leuchte, die das Gerät 11 darstellt, die Lichtfarben der beschriebenen Weise einstellt.

Somit ist durch das System 1 das automatische Einstellen des Betriebszustands 21 des Kraftfahrzeugs 2 auf Betriebszustände 28 der Vorrichtungen 4 in der Umgebung und die Anpassung der Betriebszustände 28 der zumindest einen Vorrichtung 4 in Abhängigkeit vom Betriebszustand 21 des Kraftfahrzeugs 2 ermöglicht.

Über den Auslösekanal 23 stellt die Steuereinrichtung 15 des Kraftfahrzeugs 2 dabei effektiv Schnittstellen der Fahrzeugkomponenten 16 zum Einstellen des Betriebszustandes 21 bereit. Die Schnittstellen werden durch die Servereinrichtung 3 öffentlich oder mit Zugangskontrolle im Internet 5 zur Verfügung gestellt. Somit kann die zumindest eine Vorrichtung 4 auf diese Schnittstellen über eine jeweilige Verknüpfungsvorschrift 31 zugreifen. Über den Auslösekanal 23 können dabei die Schnittstellen für die einzelnen Fahrzeugkomponenten 16 realisiert sein, beispielsweise für folgende Zustandsänderungen: Setze Innenraumtemperatur, setze Standheizungstimer, frage Fahrzeugposition an; setze Navigationsziel und/oder Navigationsfavorit, setze geographische Grenze 40.

Durch den Ereigniskanal 22 stellt die Steuereinrichtung 15 Schnittstellen zum Signalisieren der Betriebszustände der Fahrzeugskomponenten 16 an der Servereinrichtung 3 bereit, welche wiederum als bedingte Anweisungen durch die Steuereinrichtung 3 verarbeitet werden können. Die Schnittstellen sind beispielsweise jeweils für die Fahrzeugkomponenten 16 vorgesehen, sodass sich beispielhaft folgende Schnittstellen zum Signalisieren von Betriebszuständen ergeben können: Sende Fahrzeugposition, sende Kamerabild, sende das momentan aktive Navigationsziel, sende eine Grenzüberschreitungsnachricht, die das Überschreiten der Grenze 40 signalisiert.

Der Ereigniskanal 22 und der Auslösekanal 23 fassen diese einzelnen Schnittstellen zusammen. Die Schnittstellen können beispielsweise auf der Grundlage eines Protokolls realisiert sein, dass unter der Bezeichnung iftt an sich bekannt ist. Als Schnittstellen können beispielsweise für das Navigationsgerät 17, die Standheizung/Klimaanlage 18 und/oder die Kamera 19 vorgesehen sein. Eine jeweilige weitere Schnittstelle kann zum Bedienen eines Scheinwerfers und/oder einer Hupe des Kraftfahrzeugs vorgesehen sein.

Der Ereigniskanal 22 und der Auslösekanal 23 können über eine Backendeinrichtung B geführt sein, welche hier durch die Servereinrichtung 3 von der Steuereinrichtung 5 dahingehend entkoppelt. Es ist also eine indirekte Kommunikation zwischen der Servereinrichtung 3 und der Steuereinrichtung 5 über die Backendeinrichtung B vorgesehen. Die Backendeinrichtung B kann ein weiterer Server des Internets sein. Hierdurch ist eine Manipulation des Betriebszustands 21 durch Schadsoftware verhindert.

Die Schnittstellen für den Ereigniskanal 22 und den Auslösekanal 23 werden die über die im Internet übliche IT-Technik aufgerufen. Die Bereitstellung kann aber auch über ein anderes Protokoll als das IP (Internetprotokoll) erfolgen.

Die Servereinrichtung 3 verarbeitet die Ereignisdaten 24 und erzeugte Auslösedaten 25 auf der Grundlage von bedingten Anweisungen (IF - THEN), die durch die Verknüpfungsvorschriften 31 gebildet sind. Hierdurch werden die Ereignisdaten 24 aus dem Kraftfahrzeug verarbeitet und Auslöser oder Stellbefehle als Auslösedaten 25 an das Kraftfahrzeug erzeugt. Die Servereinrichtung 3 stellt somit eine Verknüpfungslogik oder Steuerlogik bereit, um bedingte Anweisungen der Verknüpfungsvorschriften 31 zu verarbeiten und hierdurch die Integration der zumindest einen Vorrichtung 4 und des Kraftfahrzeugs 2 zu realisieren. Der Automobilhersteller des Kraftfahrzeugs 2 muss also nicht die komplette Integration des Kraftfahrzeugs 2 in die Umwelt selbst implementieren, da Verbindungen beispielsweise zu einer Smart-Home-Steuerung oder Gebäudesteuereinrichtung 6, einem Ambientelicht, einer Leuchte 11 einem Online-Kalender, einem Smartphone 9 oder einer Überwachungseinrichtung 8 für Körperfunktionen durch die jeweiligen Hersteller der zumindest einen Vorrichtung 4 realisiert werden können.

Indem das Kraftfahrzeug 2 als Empfänger der Auslösedaten 25 Schnittstellen für die Steuerung der Fahrzeugkomponenten 16 durch die Steuereinrichtung 15 bereitstellt, ist ein automatisiertes Ändern des Betriebszustands 25, das heißt der einzelnen Betriebszustände der Fahrzeugkomponenten 16 ermöglicht. Zusätzlich kann das Kraftfahrzeug 2 Schnittstellen der zumindest einen Vorrichtung 4 dadurch aufrufen, dass durch das Kraftfahrzeug 2 die Ereignisdaten 24 aussendet. Das Kraftfahrzeug 2 lässt sich so mit bedingten Anweisungen der Verknüpfungsvorschriften 31 in die Umwelt integrieren.

Insgesamt zeigt das Beispiel, wie durch die Erfindung eine Vernetzung eines Kraftfahrzeugs mit seiner Umwelt realisiert werden kann.

## Patentansprüche

1. Verfahren zum Koppeln eines Betriebszustands (21) eines Kraftfahrzeugs (2) mit einem jeweiligen Betriebszustand (28) zumindest einer fahrzeugexternen Vorrichtung (4), wobei in einer Servereinrichtung (3)
- durch das Kraftfahrzeug (2) über zumindest einen Ereigniskanal (22) Ereignisdaten (24) zum Beschreiben des aktuellen Betriebszustands (21) des Kraftfahrzeugs (2) bereitgestellt und/oder über zumindest einen Auslösekanal (23) Auslösedaten (25) zum Einstellen eines Sollbetriebszustands des Kraftfahrzeugs (2) empfangen werden und
- durch die zumindest eine fahrzeugexterne Vorrichtung (4) jeweils über zumindest einen Ereigniskanal (26) Ereignisdaten (29) zum Beschreiben des aktuellen Betriebszustands (28) der Vorrichtung (4) bereitgestellt und/oder über zumindest einen Auslösekanal (27) Auslösedaten (30) zum Einstellen eines Sollbetriebszustands der Vorrichtung (4) empfangen werden,
- wobei hierdurch insgesamt zumindest ein das Kraftfahrzeug (2) mit jeweils einer der zumindest einen Vorrichtung (4) koppelndes Kanalpaar (32, 33) aus einem Ereigniskanal (22, 26) und einem Auslösekanal (23, 27) bereitgestellt ist und wobei
- durch eine Eingabeeinrichtung (3) in Abhängigkeit von einer Benutzereingabe (IN) jedes Kanalpaar gebildet und zumindest eine Verknüpfungsvorschrift (31) festgelegt wird, wobei jede Verknüpfungsvorschrift (31) zu einem bereitgestellten Kanalpaar (32, 33) jeweils vorbestimmte Auslösedaten (25, 30) angibt, die über den Auslösekanal (23, 27) des Kanalpaars (32, 33) ausgesendet werden, falls über den Ereigniskanal (22, 26) des Kanalpaars (32, 33) vorbestimmte Ereignisdaten (24, 29) empfangen werden, und jede Verknüpfungsvorschrift als Wenn-Dann-Regel realisiert ist, bei welcher die WENN-Bedingung die Ereignisdaten beschreibt und die DANN-Folge die Auslösedaten beschreibt, und somit durch jede Verknüpfungsvorschrift ein Rezept dargestellt ist, wie das Kraftfahrzeug und die zumindest eine fahrzeugexterne Vorrichtung aufeinander reagieren sollen, wobei dies der Benutzer über die Eingabeeinrichtung einstellt, und
- durch die Servereinrichtung (3) der Betriebszustand (21) des Kraftfahrzeugs (2) und der jeweilige Betriebszustand (28) der zumindest einen Vorrichtung (4) gemäß der zumindest einen festgelegten Verknüpfungsvorschrift (31) gekoppelt werden,
**dadurch gekennzeichnet, dass**
die zumindest eine Vorrichtung (4) eine Überwachungseinrichtung (8) für zumindest eine Körperfunktion eines Benutzers des Kraftfahrzeugs (2) umfasst und als eine der zumindest einen Verknüpfungsvorschrift (31) festgelegt wird, dass über den Ereigniskanal (26) der Überwachungseinrichtung (8) Körperzustandsdaten empfangen werden und über den Auslösekanal (23) des Kraftfahrzeugs (2) in Abhängigkeit von den empfangenen Körperzustandsdaten ein Stellbefehl an das Kraftfahrzeug (2) ausgesendet wird, wobei
durch die Körperzustandsdaten ein Erwachenszeitpunkt des Benutzers signalisiert wird und als Stellbefehl ein Startzeitpunkt einer Standheizung des Kraftfahrzeugs ausgesendet wird, indem durch die Verknüpfungsvorschrift das Rezept festgelegt ist, dass nach dem Aufwachen des Benutzers die Standheizung nach einer vorbestimmten Zeitdauer gestartet wird.

2. Verfahren nach Anspruch 1, wobei die zumindest eine Vorrichtung (31) eine Gebäudesteuereinrichtung (6) eines Gebäudes (7) umfasst und hierdurch durch das zumindest eine Kanalpaar (32, 33) das Kraftfahrzeug (2) über zumindest eine Verknüpfungsvorschrift (31) mit der Gebäudesteuereinrichtung (6) des Gebäudes (7) gekoppelt ist.

3. Verfahren nach Anspruch 2, wobei als eine der zumindest einen Verknüpfungsvorschrift (31) festgelegt wird, dass über den Ereigniskanal (22) des Kraftfahrzeugs (2) ein Navigationsziel eines Navigationsgeräts (17) des Kraftfahrzeugs (2) empfangen wird und über den Auslösekanal (27) der Gebäudesteuereinrichtung (6) ein Schaltbefehl zum Einstellen eines Betriebsprofils für einen Leerstand an die Gebäudesteuereinrichtung (6) ausgesendet wird, falls das Navigationsziel weiter als eine vorbestimmte Mindestdistanz von dem Gebäude (7) entfernt ist.

4. Verfahren nach Anspruch 2 oder 3, wobei als eine der zumindest einen Verknüpfungsvorschrift (31) festgelegt wird, dass über den Ereigniskanal (26) der Gebäudesteuereinrichtung (6) eine aktuelle Solltemperatur einer Heizungsanlage des Gebäudes (7) empfangen wird und die Solltemperatur über den Auslösekanal (23) des Kraftfahrzeugs (2) als Zieltemperatur einer Klimaanlage (18) des Kraftfahrzeugs (2) an das Kraftfahrzeug (2) ausgesendet wird.

5. Verfahren nach einem der vorhergehenden Ansprüche, wobei die zumindest eine Vorrichtung eine Nachrichtenempfangseinrichtung (9) umfasst und als eine der zumindest einen Verknüpfungsvorschrift (31) festgelegt wird, dass über den Ereigniskanal (22) des Kraftfahrzeugs (2) ein Fahrzeugstandort (43) empfangen wird und über den Auslösekanal (27) der Nachrichtenempfangseinrichtung (9) eine Standortbenachrichtigung mit dem Fahrzeugstandort (43) an die Nachrichtenempfangseinrichtung (9) ausgesendet wird, falls das Kraftfahrzeug (2) den Fahrzeugstandort (43) innerhalb eines vorbestimmten Zeitintervalls aufweist.

6. Verfahren nach einem der vorhergehenden Ansprüche, wobei die zumindest eine Vorrichtung (4) eine Kommunikationseinrichtung (9) mit einem Ortungssensor umfasst und als eine der zumindest einen Verknüpfungsvorschrift (31) festgelegt wird, dass über den Ereigniskanal (26) der Kommunikationseinrichtung (9) eine Nachricht empfangen wird und über den Auslösekanal (23) des Kraftfahrzeugs (2) der Standort der Kommunikationseinrichturig (9) als Navigationsziel an das Kraftfahrzeug (2) ausgesendet wird, falls die Nachricht innerhalb eines vorbestimmten Zeitintervalls empfangen wird und/oder die Kommunikationseinrichtung (9) einer vorbestimmten Person zugeordnet ist.

7. Verfahren nach einem der vorhergehenden Ansprüche, wobei die zumindest eine Vorrichtung (4) eine Gerätesteuereinrichtung (10) eines Geräts (10) umfasst und als eine der zumindest einen Verknüpfungsvorschrift (31) festgelegt wird, dass über den Ereigniskanal (22) des Kraftfahrzeugs (2) eine Grenzüberschreitungsnachricht, welche ein Verlassen eines vorbestimmten Gebiets (41) oder ein Einfahren in das Gebiet (41) angibt, empfangen wird und über den Auslösekanal (27) der Gerätesteuereinrichtung (10) ein Aktivierungssignal einer Gerätefunktion des Geräts (11) an die Gerätesteuereinrichtung (10) ausgesendet wird.

8. Servereinrichtung (3), die dazu eingerichtet ist ein Verfahren nach einem der vorhergehenden Ansprüche durchzuführen.

## Claims

1. Method for connecting an operating state (21) of a motor vehicle (2) to a respective operating state (28) of at least one vehicle-external device (4), wherein in a server device (3)
- the motor vehicle (2) makes available event data (24) via at least one event channel (22) to describe the current operating state (21) of the motor vehicle (2) and/or receives triggering data (25) via at least one triggering channel (23) to set a required operating state of the motor vehicle (2) and
- the at least one vehicle-external device (4) respectively makes available event data (29) to describe the current operating state (28) of the device (4) via at least one event channel (26) and/or receives triggering data (30) via at least one triggering channel (27) to set a required operating state of the device (4),
- wherein as a result in total at least one channel pair (32, 33), comprising an event channel (22, 26) and a triggering channel (23, 27), which connects the motor vehicle (2) to in each case one of the at least one device (4), is made available and wherein
- depending on a user input (IN), each channel pair is formed and at least one linking rule (31) is defined by an input device (3), wherein each linking rule (31) specifies respectively predetermined triggering data (25, 30) for a channel pair (32, 33) which is made available, which are output via the triggering channel (23, 27) of the channel pair (32, 33) if predetermined event data (24, 29) is received via the event channel (22, 26) of the channel pair (32, 33), and each linking rule is realised as if-then rule, in which the IF condition describes the event data and the THEN consequence describes the triggering data, and thus each linking rule represents a recipe for how the motor vehicle and the at least one vehicle-external device should react to each other, wherein the user sets this via the input device, and
- the server device (3) connects the operating state (21) of the motor vehicle (2) and the respective operating state (28) of the at least one device (4) according to the at least one defined linking rule (31),
**characterised in that** the at least one device (4) comprises a monitoring device (8) for at least one bodily function of a user of the motor vehicle (2) and it is defined as one of the at least one linking rule (31) that data on physical condition are received via the event channel (26) of the monitoring device (8) and, depending on the received data on physical condition, a control command is output to the motor vehicle (2) via the triggering channel (23) of the motor vehicle (2), wherein a moment of awakening of the user is signalled by the data on physical condition and a starting time of a parking heater of the motor vehicle is output as control command by the linking rule defining the recipe that, after the awakening of the user, the parking heater is started after a predetermined period of time.

2. Method according to claim 1, wherein the at least one device (31) comprises a building control device (6) of a building (7) and as a result of this the motor vehicle (2) is connected to the building control device (6) of the building (7) by the at least one channel pair (32, 33) via at least one linking rule (31).

3. Method according to claim 2, wherein it is defined as one of the at least one linking rule (31) that a navigation destination of a navigation device (17) of the motor vehicle (2) is received via the event channel (22) of the motor vehicle (2) and a switching command to set an operating profile for an empty state is output to the building control device (6) via the triggering channel (27) of the building control device (6), if the navigation destination is more than a predetermined minimum distance away from the building (7).

4. Method according to claim 2 or 3, wherein it is defined as one of the at least one linking rule (31) that a current required temperature of a heating system of the building (7) is received via the event channel (26) of the building control device (6) and the required temperature is output to the motor vehicle (2) via the triggering channel (23) of the motor vehicle (2) as target temperature of an air-conditioning system (18) of the motor vehicle (2).

5. Method according to any one of the preceding claims, wherein the at least one device comprises a message receiving device (9) and it is defined as one of the at least one linking rule (31) that a vehicle location (43) is received via the event channel (22) of the motor vehicle (2) and a location notification with the vehicle location (43) is output to the message receiving device (9) via the triggering channel (27) of the message receiving device (9), if the motor vehicle (2) has the vehicle location (43) within a predetermined time interval.

6. Method according to any one of the preceding claims, wherein the at least one device (4) comprises a communication device (9) with a location sensor and it is defined as one of the at least one linking rule (31) that a message is received via the event channel (26) of the communication device (9) and the location of the communication device (9) is output to the motor vehicle (2) as navigation destination via the triggering channel (23) of the motor vehicle (2), if the message is received within a predetermined time interval and/or the communication device (9) is assigned to a predetermined person.

7. Method according to any one of the preceding claims, wherein the at least one device (4) comprises an instrument control device (10) of an instrument (10) and it is defined as one of the at least one linking rule (31) that a boundary crossing message, indicating departure from a predetermined area (41) or entry into said area (41), is received via the event channel (22) of the motor vehicle (2) and an activation signal of an instrument function of the instrument (11) is output to the instrument control device (10) via the triggering channel (27) of the instrument control device (10).

8. Server device (3) configured to perform a method according to any one of the preceding claims.

## Revendications

1. Procédé servant à coupler un état de fonctionnement (21) d'un véhicule automobile (2) à un état de fonctionnement (28) respectif d'au moins un dispositif (4) externe au véhicule, dans lequel dans un système de serveur (3)
- des données d'événement (24) servant à décrire l'état de fonctionnement (21) instantané du véhicule automobile (2) sont fournies par le véhicule automobile (2) par l'intermédiaire d'au moins un canal d'événement (22) et/ou des données de déclenchement (25) servant à régler un état de fonctionnement de consigne du véhicule automobile (2) sont reçues par l'intermédiaire d'au moins un canal de déclenchement (23) et
- des données d'événement (29) servant à décrire l'état de fonctionnement (28) instantané du dispositif (4) sont fournies par l'au moins un dispositif (4) externe au véhicule respectivement par l'intermédiaire d'au moins un canal d'événement (26) et/ou des données de déclenchement (30) servant à régler un état de fonctionnement de consigne du dispositif (4) sont reçues par l'intermédiaire d'au moins un canal de déclenchement (27)
- dans lequel de ce fait globalement au moins une paire de canaux (32, 33) couplant le véhicule automobile (2) à respectivement un de l'au moins un dispositif (4) et d'un canal de déclenchement (23, 27) est fournie à partir d'un canal d'événement (22, 26), et dans lequel
- chaque paire de canaux est formée et au moins une directive de combinaison (31) est fixée par un système de saisie (3) en fonction d'une entrée d'utilisateur (IN), dans lequel chaque directive de combinaison (31) concernant une paire de canaux (32, 33) fournie indique respectivement des données de déclenchement (25, 30) prédéfinies, qui sont envoyées par l'intermédiaire du canal de déclenchement (23, 27) de la paire de canaux (32, 33) si des données d'événement (24, 29) prédéfinies sont reçues par l'intermédiaire du canal d'événement (22, 26) de la paire de canaux (32, 33) et chaque directive de combinaison est réalisée en tant que règle quand-alors, dans laquelle la condition QUAND décrit les données d'événement et la séquence ALORS décrit les données de déclenchement, et ainsi une formule est représentée par chaque directive de spécification concernant la manière selon laquelle le véhicule automobile et l'au moins un dispositif externe au véhicule doivent réagir l'un à l'autre, dans lequel l'utilisateur règle cet aspect par l'intermédiaire du système de saisie, et
- l'état de fonctionnement (21) du véhicule automobile (2) et l'état de fonctionnement (28) respectif de l'au moins un dispositif (4) sont couplés par le système de serveur (3) en application de l'au moins une directive de combinaison (31) fixée,
**caractérisé en ce que**
l'au moins un dispositif (4) comprend un système de surveillance (8) pour au moins une fonction corporelle d'un utilisateur du véhicule automobile (2) et est fixé en tant qu'une de l'au moins une directive de combinaison (31) le fait que des données d'état corporel sont reçues par l'intermédiaire du canal d'événement (26) du système de surveillance (8) et un ordre de réglage est envoyé au véhicule automobile (2) par l'intermédiaire du canal de déclenchement (23) du véhicule automobile (2) en fonction des données d'état corporel reçues, dans lequel
un moment de réveil de l'utilisateur est signalé par les données d'état corporel et un moment de démarrage d'un chauffage d'appoint du véhicule automobile est envoyé en tant qu'ordre de réglage **en ce que** la directive de combinaison permet de fixer la formule selon laquelle le chauffage d'appoint est démarré après une durée prédéfinie après le réveil de l'utilisateur.

2. Procédé selon la revendication 1, dans lequel l'au moins un dispositif (31) comprend un système de commande de bâtiment (6) d'un bâtiment (7) et de ce fait le véhicule automobile (2) est couplé par l'intermédiaire d'au moins une directive de combinaison (31) au système de commande de bâtiment (6) du bâtiment (7) par l'au moins une paire de canaux (32, 33).

3. Procédé selon la revendication 2, dans lequel est fixé en tant qu'une de l'au moins une directive de combinaison (31) le fait qu'une destination de navigation d'un appareil de navigation (17) du véhicule automobile (2) est reçue par l'intermédiaire du canal d'événement (22) du véhicule automobile (2) et un ordre de commutation servant à régler un profil de fonctionnement pour un état à vide est envoyé au système de commande de bâtiment (6) par l'intermédiaire du canal de déclenchement (27) du système de commande de bâtiment (6) si la destination de navigation est davantage éloignée du bâtiment (7) qu'une distance minimale prédéfinie.

4. Procédé selon la revendication 2 ou 3, dans lequel est fixé en tant qu'une de l'au moins une directive de combinaison (31) le fait qu'une température de consigne instantanée d'une installation de chauffage du bâtiment (7) est reçue par l'intermédiaire du canal d'événement (26) du système de commande de bâtiment (6) et la température de consigne est envoyée au véhicule automobile (2) en tant que température cible d'une installation de climatisation (18) du véhicule automobile (2) par l'intermédiaire du canal de déclenchement (23) du véhicule automobile (2).

5. Procédé selon l'une quelconque des revendications précédentes, dans lequel l'au moins un dispositif comprend un système de réception de messages (9) et est fixé en tant qu'une de l'au moins une directive de combinaison (31) le fait qu'un emplacement de véhicule (43) est reçu par l'intermédiaire du canal d'événement (22) du véhicule automobile (2) et une notification d'emplacement avec l'emplacement de véhicule (43) est envoyée au système de réception de messages (9) par l'intermédiaire du canal de déclenchement (27) du système de réception de messages (9) si le véhicule automobile (2) présente l'emplacement de véhicule (43) dans un intervalle de temps prédéfini.

6. Procédé selon l'une quelconque des revendications précédentes, dans lequel l'au moins un dispositif (4) comprend un système de communication (9) avec un capteur de localisation et est fixé en tant qu'une de l'au moins une directive de combinaison (31) le fait qu'un message est reçu par l'intermédiaire du canal d'événement (26) du système de communication (9) et l'emplacement du système de communication (9) est envoyé au véhicule automobile (2) en tant que cible de navigation par l'intermédiaire du canal de déclenchement (23) du véhicule automobile (2) si le message est reçu dans un intervalle de temps prédéfini et/ou si le système de communication (9) est associé à une personne prédéfinie.

7. Procédé selon l'une quelconque des revendications précédentes, dans lequel l'au moins un dispositif (4) comprend un système de commande d'appareil (10) d'un appareil (10) et est fixé en tant qu'une de l'au moins une directive de combinaison (31) le fait qu'un message de dépassement de limite, qui indique une sortie d'une zone (41) prédéfinie ou une entrée dans la zone (41), est reçu par l'intermédiaire du canal d'événement (22) du véhicule automobile (2) et un signal d'activation d'une fonction d'appareil de l'appareil (11) est envoyé au système de commande d'appareil (10) par l'intermédiaire du canal de déclenchement (27) du système de commande d'appareil (10).

8. Système de serveur (3), qui est mis au point pour exécuter un procédé selon l'une quelconque des revendications précédentes.
